Europäisches Patentamt

European Patent Office

Office européen des brevets

(11) Publication number: **0 288 212**
**A1**

## EUROPEAN PATENT APPLICATION

(21) Application number: 88303375.5

(22) Date of filing: 14.04.88

(51) Int. Cl.⁴: **H01B 3/12** , **C04B 35/46** , **H01G 4/12**

(30) Priority: 24.04.87 US 38864

(43) Date of publication of application:
26.10.88 Bulletin 88/43

(84) Designated Contracting States:
AT BE CH DE ES FR GB GR IT LI LU NL SE

(71) Applicant: TAM CERAMICS INC.
4511 Hyde Park Boulevard
Niagara Falls, NY 14305(US)

(72) Inventor: Chu, Michael S.H.
4790 E. Eddy Dr.
Lewiston, New York 14092(US)
Inventor: Rose, Daniel C.
4502 Simmons Road
Ransomville, New York 14131(US)

(74) Representative: Crisp, David Norman et al
D. YOUNG & CO. 10 Staple Inn
London, WC1V 7RD(GB)

(54) Dielectric ceramic compositions having high dielectric constants.

(57) Ceramic dielectric compositions which have dielectric constants above 100, dissipation factors of less than 0.1 percent, and temperature coefficient characteristics of less than 150 ppm/°C. The dielectric compositions are also sinterable at temperatures below 1,140°C.

Said compositions comprising about 84,7 to 86,4 % of a precursor material and 13.61 to 15.3 % of a frit composition, the precursor material comprising principally about 52,08 to 55,03 % neodymium oxide, 28,76 to 29,88 % titanium oxide, 8,32 to 11,15 % lead oxide, and 6,61 to 8,69 % barium oxide, the frit composition comprising about 10,00 to 10,20 % bismuth titanate, 2,35 to 4,35 % lead oxide, 0,28 to 0,70 % silicon oxide, 0,25 to 0,26 % niobium pentoxide, 0,09 to 0,50 % boron oxide, and 0,1 % manganese carbonate.

EP 0 288 212 A1

## Dielectric Ceramic Compositions having High Dielectric Constants

This invention relates generally to ceramic dielectric compositions.

Multilayer ceramic capacitors are commonly made by casting or otherwise forming insulating layers of dielectric ceramic powder; placing thereupon conducting metal electrode layers, usually a palladium/silver alloy in the form of metallic paste; stacking the resulting elements to form the multilayer capacitor; and firing to densify the material thus forming a multilayer ceramic capacitor.

Dielectric ceramic compositions known in the art for making multilayer capacitors having very stable temperature coefficient characteristics usually have dielectric constants of not more than about 80. Such compositions, therefore, are insufficient for application in electric circuits requiring capicitors having both low dissipation factors and very stable temperature coefficient characteristics. In such applications it would be desirable for the dielectric ceramic composition to have a dielectric constant which changes from its base value at 25°C (room temperature) per ° C temperature change (TCC) by not more than about +/- 150 ppm/°C. The insulation resistance time capacitance product of such compositions should be more than about 1000 ohm-farads at 25°C and more than about 100 ohm-farads at maximum working temperature, 125°C in most cases. Also the dielectric constants (K) should be as high as possible and the dissipation factors (DF) should be as low as possible.

We have now found it possible to provide a ceramic dielectric composition suitable for manufacturing multilayer ceramic capacitors having a dielectric constant above about 100, a dissipation factor of less than about 0.1%, and an insulation resistance (R) times capacitance (C) product (RC) of more than about 1000 ohm-farads at 25°C and more than about 100 ohm-farads at 125°C.

We have also found it possible to provide a ceramic dielectric composition having stable TCC characteristics in which the dielectric constants or capacitance variation with temperature per ° C with reference values at 25°C do not exceed +/- 150 ppm/°C.

We have further found it possible to provide a ceramic dielectric composition having the aforementioned properties which is sinterable at temperatures below 1140°C so that 70 weight percent silver/30 weight percent palladium electrode material can be used for manufacturing multilayer capacitors.

In accordance with the invention, we provide a dielectric composition comprising about 84.7 - 86.39 weight percent of a precusor material consisting essentially of about 0 - 0.68 weight percent strontium oxide, about 6.61 - 8.69 weight percent barium oxide, about 8.32 - 11.15 weight percent lead oxide, about 52.08 - 55.03 weight percent neodymium oxide, about 28.76 - 29.88 weight percent titanium oxide, about 0 - 0.06 weight percent manganese oxide; and about 13.61 - 15.3 weight percent of a frit composition consisting essentially of about 10.00 - 10.20 weight percent bismuth titanate, about 0.10 weight percent manganese carbonate, about 0.25 - 0.26 weight percent niobium pentoxide, about 2.35 - 4.35 weight percent lead oxide, about 0.09 - 0.50 weight percent boron oxide, and about 0.28 - 0.70 weight percent silicon oxide. The compositions may contain incidental ingredients and impurities.

The present invention provides dielectric ceramic compositions having dielectric constants above 100, with temperature coefficient characteristics (TCC) less than +/-150 ppm/°C, and with dissipation factors less than 0.1%. Such a ceramic composition can be prepared by firing the component oxides or precusors thereof at a temperature below 1140°C. Because of their high dielectric constants, low dissipation factors, and stable temperature coefficient characteristics, they are suitable for application in electronic devices where ceramic multilayer capacitors with low loss, stable temperature coefficient characteristics are required. Specific examples are TV tuners and resonator circuits.

In a preferred embodiment, the ceramic dielectric composition is formed from a mixture consisting essentially of about 10.00 weight percent bismuth titanate, about 0.1 weight percent manganese carbonate, about 0.25 weight percent niobium pentoxide, about 4.23 weight percent lead oxide, about 0.21 weight percent boron oxide, about 0.51 weight percent silicon oxide, and about 84.70 weight percent of a precusor material consisting essentially of about 8.47 weight percent barium oxide, about 10.38 weight percent lead oxide, about 52.05 weight percent neodymium oxide and about 29.13 weight percent titanium oxide. A fired ceramic body of the present invention is produced by simultaneously reacting and firing the constituent dielectric oxides of the ceramic preparation, including a ceramic precursor consisting essentially of barium oxide, strontium oxide, neodymium oxide, lead oxide, titanium oxide, and manganese oxide, and a frit consisting essentially of bismuth titanate, manganese carbonate, niobium pentoxide, lead oxide, boron oxide and silicon oxide.

In preparing the ceramic composition strontium oxide, barium oxide, neodymium oxide, lead oxide, titanium oxide, and manganese oxide may be slurried together in water, or physically blended together, calcined and milled to fine particle size to form a precursor material. The precursor material is further slurried together in water, or physically blended together with bismuth titanate, manganese carbonate niobium pentoxide, lead oxide, boron oxide, and silicon oxide.

The mixture of ceramic preparation may be cast into a sheet using standard methods, and formed into a multilayer capacitor structure with internal electrodes such as 70 percent silver/30 percent palladium, and fired at below 1140°C for about one to four hours. A fired dielectric composition of this invention has a dielectric constant (K) above 100, dissipation factor (DF) less than 0.1%, and temperature coefficient characteristics (TCC) less than +/- 150 ppm/°C. The invention is more particularly illustrated by the following examples.

## EXAMPLE 1

Approximately 50 grams each of a ceramic precusor composition was made by uniformly mixing, in a high speed Spex model 800-2 paint mixer manufactured by Spec Industries, Inc., New Jersey, high purity strontium oxide (SrO), barium oxide (BaO), lead oxide (PbO), neodymium oxide ($Nd_2O_3$), titanium oxide ($TiO_2$) and Manganese oxide ($MnO_2$) in deionized water according to the weight percents as given in Table 1. The neodynium oxide employed in this invention has a purity of at least 99.5 weight percent with major impurities being other types of rare earth elements such as lanthanum oxide ($La_2O_3$). All the other materials employed have purity of more than 99.9 weight percent.

In actual practice, oxides of the other forms as carbonates, nitrates and hydroxides can also be used provided that, after the individual oxide is decomposed, the final compositions are identical to these as listed in Table 1.

After uniformly mixing the above materials, the slurries were dried and calcined from about 1100°C to about 1150°C for about 1 to 4 hours. The calcined materials were crushed with motor and pestle and sieved through a 325 mesh screen. A frit composition consisting essentially of about 65.6 weight percent of bismuth titanate ($Bi_2Ti_2O_7$), about 1.6 weight percent of niobium pentoxide ($Nb_2O_5$), about 24.4 weight percent of lead oxide (PbO), abut 3.2 weight percent of boron oxide ($B_2O_3$) as boric acid ($H_3BO_3$), about 4.5 weight percent of silicon dioxide ($SiO_2$), and about 0.6 weight percent of manganese oxide ($MnO_2$) was further mixed and added into the precusor compositions. The weight ratio of frit to precusor was about 0.18. Approximately 2.4 to 4.00cc of a binder solution including about 26 weight percent water, about 26 weight percent propylene glycol and about 48 weight percent corn syrup was mixed into the ceramic powder in a mortar and pestle which was then granulated through a 40 mesh nylon screen. Discs of the resultant mixture having a diameter of about 1.27 cm and a thickness of about 0.1 to 0.15 cm were pressed at a pressure of about 38,000 lbs per square inch in a stainless steel die. Ths discs were placed on a stabilized zirconia setter and fired at temperature of approximately 1100°C to 1140°C for about 1 to 4 hours. After cooling, silver electrodes were painted on the discs which were then fired at approximately 815°C to sinter on the electrodes. The capacitance change with temperature versus capacitance at 25°C (TC) were then measured with model ESI2110A capacitance bridge at 1KHz measurement frequency at temperatures ranging from about -55°C to about +125°C at about 20°C intervals. The dielectric constant of each sample (K) was then calculated from the fundamental capacitance equation:

$$K = (5.66 \cdot C \cdot T) \, / \, (D \cdot D) \quad (1)$$

where K = dielectric constant of the sample

T = thickness of the disc in inches

D = diameter of the disc in inches

C = capacitance of the disc in pico farads

The temperature coefficient characteristics (TCC) of each sample was calculated from the slope of the TC curve according to the following equation:

$$TCC = ([(C_T - C_{25})/C_{25}]/(T-25)) \times 10^6 \quad (2)$$

where TCC is the temperature coefficient in ppm/°C,

$C_T$ is the capacitance of the sample at temperature T,

$C_{25}$ is the capacitance of the sample at reference, temperature (25°C), and

T is the temperature (°C) at which CT is measured.

The dielectric properties of the disc samples of compositions 1-15, as summarized in Table 2, demonstrated that ceramic compositions of this invention have dielectric constants above 100 with dissipation factors less than 0.06% and TCC values not exceeding 150 ppm/°C. When the BaO concentration in the precusor is above about 11.0 weight percent such as in composition 10, and/or when the SrO concentration in the precusor is above about 2.0 weight percent, such as in composition 11, the ceramics became difficult to sinter. When the PbO concentration in the precursor is above about 14.2 weight percent such as in compositions 12, 13, 14 and 15, the TCC values are more than about 150 ppm/°C either on low temperature side (from about -55 to about 25°C) or on high temperature side (from about 25°C to about 125°C) or both.

Table 1

| Composition | SrO | BaO | PbO | $Nd_2O_3$ | $TiO_2$ | $MnO_2$ |
|---|---|---|---|---|---|---|
| 1 | 0 | 7.65 | 9.75 | 53.69 | 28.91 | 0 |
| 2 | 0 | 7.65 | 9.74 | 53.66 | 28.89 | 0.06 |
| 3 | 0 | 6.61 | 11.15 | 53.42 | 28.76 | 0.05 |
| 4 | 0 | 8.69 | 8.32 | 53.91 | 29.03 | 0.06 |
| 5 | 0 | 7.43 | 9.46 | 55.03 | 28.07 | 0 |
| 6 | 0 | 7.87 | 10.03 | 52.36 | 29.74 | 0 |
| 7 | 0 | 7.78 | 9.91 | 52.44 | 29.88 | 0 |
| 8 | 0 | 8.24 | 10.49 | 52.08 | 29.18 | 0 |
| 9 | 0.68 | 7.71 | 8.34 | 54.08 | 29.12 | 0.06 |
| 10 | 0 | 11.17 | 14.22 | 49.94 | 24.66 | 0 |
| 11 | 2.25 | 6.66 | 11.08 | 52.22 | 27.78 | 0 |
| 12 | 0 | 12.28 | 15.14 | 43.28 | 29.29 | 0 |
| 13 | 1.34 | 10.37 | 15.24 | 43.56 | 29.48 | 0 |
| 14 | 0 | 12.73 | 15.70 | 42.99 | 28.58 | 0 |
| 15 | 0 | 11.82 | 14.59 | 43.58 | 30.01 | 0 |

0 288 212

. <u>Table 2</u>

| Composition | <u>K</u> | <u>DF(%)</u> | <u>TCC (ppm/°C)</u> | |
|---|---|---|---|---|
| | | | <u>-55°C to 25°C</u> | <u>-25°C to 125°C</u> |
| 1 | 100.5 | 0.026 | 51.9 | 31.6 |
| 2 | 101.0 | 0.031 | 83 | 33.7 |
| 3 | 103.4 | 0.053 | 131 | 50 |
| 4 | 103.5 | 0.031 | 111 | 69 |
| 5 | 96.2 | 0.038 | 126 | 46.8 |
| 6 | 104.3 | 0.060 | 34.6 | 35.3 |
| 7 | 104.7 | 0.060 | 41.7 | 35.5 |
| 8 | 106.9 | 0.060 | 44.0 | 52.7 |
| 9 | 103.5 | 0.05 | 55.4 | 37.4 |
| 10 | Does not sinter | | | |
| 11 | Poor sintering, porous | | | |
| 12 | 133 | 0.13 | 590 | 1500 |
| 13 | 106 | 0.12 | 37 | 147 |
| 14 | 119.7 | 0.09 | 97 | 250 |
| 15 | 111.2 | 0.13 | 39 | 232 |

<u>EXAMPLE II</u>

Approximately 280kg of ceramic precusor material was made by uniformly mixing about 8.47 weight percent barium oxide (BaO) with about 10.38 weight percent lead oxide (PbO), about 52.02 weight percent neodymium oxide ($Nd_2O_3$) about 29.13 weight percent titanium oxide ($TiO_2$). The slurry was then dried and calcined at about 1100°C to 1150°C for approximately 4 hours. The calcined material was then pulverized and jet milled to an average particle size of about 1.5 micron or less. Approximately 50 grams of the calcined material was further mixed with a frit composition consisting essentially of bismuth titanate ($Bi_2Ti_2O_7$), manganese carbonate ($MnCO_3$), niobium pentoxide ($Nb_2O_5$), lead oxide (PbO), boron oxide ($B_2O_3$), boron pentoxide ($B_2O_5$) and silicon oxide ($SiO_2$) according to the approximate weight percentages and ratios as listed in Table 3. Sintered ceramic discs were then prepared in the same manner as described in Example I. The dielectric properties of these disc samples are summarized in Table 4. This example further demonstrates that the ceramic compositions of this invention have dielectric constants above about 100 with dissipation factors of less than about 0.08% and have TCC values of not more than approximately 60 ppm/°C.

5

## Table 3

| Compo-sition | Precusor | $Bi_2Ti_2O_7$ | $MnCO_3$ | $Nb_2O_5$ | PbO | $B_2O_3$ | $SiO_2$ | PbO $+ B_2O_3$ $+ SiO_2$ | $PBO/B_2O_3/SiO_2$ |
|---|---|---|---|---|---|---|---|---|---|
| 16 | 84.70 | 10.00 | 0.10 | 0.25 | 3.75 | 0.50 | 0.70 | 4.95 | 47.15/20.16/32.69= A |
| 17 | " | " | " | " | 3.90 | 0.35 | 0.70 | " | 51.17/14.72/34.11= B |
| 18 | " | " | " | " | 4.10 | 0.27 | 0.58 | " | 57.59/12.16/30.26= C |
| 19 | " | " | " | " | 4.35 | 0.15 | 0.45 | " | 66.90/7.39/25.71= D |
| 20 | 85.32 | 10.07 | 0.10 | 0.25 | 3.26 | 0.43 | 0.61 | 4.30 | A |
| 21 | " | " | " | " | 3.39 | 0.30 | 0.61 | " | B |
| 22 | " | " | " | " | 3.56 | 0.24 | 0.50 | " | C |
| 23 | " | " | " | " | 3.78 | 0.13 | 0.39 | " | D |
| 24 | 85.86 | 10.14 | 0.10 | 0.25 | 2.80 | 0.37 | 0.52 | 3.70 | A |
| 25 | " | " | " | " | 2.92 | 0.26 | 0.52 | " | B |
| 26 | " | " | " | " | 3.07 | 0.20 | 0.43 | " | C |
| 27 | " | " | " | " | 3.25 | 0.11 | 0.34 | " | D |
| 28 | 86.39 | 10.20 | 0.10 | 0.26 | 2.35 | 0.31 | 0.44 | 3.10 | A |
| 29 | " | " | " | " | 2.44 | 0.22 | 0.44 | | B |
| 30 | " | " | " | " | 2.57 | 0.17 | 0.36 | | C |
| 31 | " | " | " | " | 2.72 | 0.09 | 0.28 | | D |

## Table 4

| Composition | K | DF(%) | TCC (ppm/°C) | |
| --- | --- | --- | --- | --- |
| | | | -55°C to 25°C | -25°C to 125°C |
| 16 | 108.1 | 0.080 | 55.3 | 54.1 |
| 17 | 107.8 | 0.055 | 30.3 | 24.3 |
| 18 | 109.2 | 0.034 | 16.3 | 14.0 |
| 19 | 110.3 | 0.018 | -7.5 | 7.5 |
| 20 | 108.5 | 0.062 | 45.6 | 33.3 |
| 21 | 107.6 | 0.062 | 32.0 | 21.0 |
| 22 | 108.5 | 0.035 | 17.7 | 19.0 |
| 23 | 109.4 | 0.034 | -11.7 | -12.2 |
| 24 | 107.0 | 0.057 | 30.2 | 20.9 |
| 25 | 108.6 | 0.038 | 20.2 | 20.2 |
| 26 | 107.8 | 0.044 | 15.8 | 18.8 |
| 27 | 108.0 | 0.026 | -10.6 | -6.0 |
| 28 | 106.9 | 0.041 | 17.8 | 12.9 |
| 29 | 107.7 | 0.047 | 13.4 | 13.4 |
| 30 | 107.9 | 0.024 | 10.0 | 14.4 |
| 31 | 109.2 | 0.027 | -11.4 | -2.1 |

## EXAMPLE III

Approximately 1200 grams of ceramic compositions with precursor and frit compositions as shown in Table 5 were prepared in the same manner as described in Example II. Approximately 350 grams of each of the above ceramic compositions were charged into a ball mill with 1/2 inch alumina media together with approximately 255 grams of a binder solution number 1 and approximately 20 grams of a binder solution number 2. Binder solution number 1 was made by uniformly mixing and dissolving approximately 186 grams dioctylphthalate, approximately 57 grams Nuostabe V-1444 (an alkali ion free organic solvent dispersing agent available from Nuodex Co., Inc., New Jersey), approximately 460 ml ethanol and approximately 1843 ml toluene, and approximately 315 grams Butvar B-76 (Butvar B-76 is a binder comprising a mixture of polyvinyl butyal, polyvinyl alcohol and polyvinyl acetate available from Monsanto Corp.) and vinyl resin. Binder solution number 2 was made by uniformly mixing and dissolving approximately 460 ml ethanol and 1843 ml toluene and approximately 315 grams Butvar B-76 vinyl resin.

It should be noted that any conventional ceramic binder composition may be used in this invention which is compatible with the other materials used since these compositions simply provide a vehicle for dispersing the ceramic particles and holding them together when the solvent is removed. Suitable binder compositions are described in "Ceramic Processing Before Firing". G.Y. Onada, Jr., et al. John Wiley and Sons (1978) Chap. 19. Polyvinyl alcohol in water and polyvinyl butyal in methyl ethyl ketone/alcohol are examples of suitable binder compositions.

This slurry was milled for about 16 hours, discharged and filtered through a 44 micron screen. This slurry had a viscosity of about 1500 to 3000 centipoise and was then de-aired and cast, in accordance with standard techniques, into a tape with a thickness of 1.5 mils. The tape was converted into multilayer ceramic capacitors having internal electrodes comprising about 70 percent Palladium/30 percent silver via conventional processes well known in the industry. The capacitors were preheated to 260° for about 48 hours, placed on stabilized zirconia setters and sintered at about 1080° to about 1140°C for about 1 hour to 4 hours. The sintered capacitors had 10 or 25 dielectric layers with dielectric thickness ranging from about 0.85 to 1.10 millimeters. Termination electrodes of DuPont Silver paint No. 4822, which is a mixture of silver and glass frit in a binder, were applied at opposite ends of the multilayer capacitor to connect alternate electrode layers and these capacitors were fired at 815° in a tunnel furnace. The capacitance (C), dissipation factor (DF), insulation resistance (R) and capacitance (C) product (RC) at 25°C, and 125°C, and capacitance change with temperature per ° C (TCC) versus capacitance at 25°C were measured with a General Radio 1683 automatic RLC bridge, Radio meter IM6 megohmmeter and Electro Scientific Industries 2110A capacitance bridge with a temperature chamber and computer control microprocessor. The capacitance and dissipation factor were measured at both 1KHz and 1MHz measurement frequencies. The insulation resistance was measured with DC applied voltage and RC products were calculated. DC breakdown voltage was also measured. The dielectric constant of each sample (K) was then calculated from the fundamental capacitance equation of:

$$K = ( C . T ) / (8.854 \times 10^{-14} . L . W . N ) \qquad (3)$$

where K = dielectric constant of the sample,

T = thickness of each dielectric layer,

C = measured capacitance value in farads,

L = fired electrode length in cm.,

W = fired electrode width in cm., and

N = number of active dielectric layers (10).

The dielectric properties of the multilayer ceramic capacitors of compositions 32-34, as shown in Table 6, demonstrated that ceramic compositions of this invention have dielectric constants above 100, dissipation factors less than 0.05% at 1KHz, TCC valves less than 60 ppm/°C and have dissipation factors less than 0.15% at 1MHz. They are suitable for electronic applications where capacitors with very stable temperature characteristics are required.

8

## Table 5

| Compo-sition | Precusor Weight % | | | | | Weight % | | | | | |
|---|---|---|---|---|---|---|---|---|---|---|---|
| | BaO | PbO | $Nd_2O_3$ | $TiO_2$ | Precusor | $Ri_2Ti_2O_7$ | $MnCO_3$ | $Nb_2O_5$ | PbO | $B_2O_3$ | $SiO_2$ |
| 32 | 7.43 | 9.46 | 55.03 | 28.07 | 84.70 | 10.00 | 0.10 | 0.25 | 3.75 | 0.50 | 0.70 |
| 33 | 8.47 | 10.38 | 52.02 | 29.13 | 84.70 | 10.00 | 0.10 | 0.25 | 4.23 | 0.21 | 0.51 |
| 34 | 8.47 | 10.38 | 52.02 | 29.13 | 86.39 | 10.00 | 0.10 | 0.26 | 2.65 | 0.13 | 0.32 |

## TABLE 6

| Composition | 32 | 33 | 34 |
|---|---|---|---|
| Sintering Temperature | 1120° C | 1140° C | 1140° C |
| Sintering Time | 1 hr. | 3 hrs. | 3 hrs. |
| Number of Active Layers | 10 | 25 | 25 |
| Dielectric Thickness (mil) | 0.85 | 0.80 | 0.80 |
| Capacitance (nF) @ 1KHz | 2.81 | 8.79 | 9.00 |
| DF(%) @ 1KHz | 0.009 | 0.002 | 0.12 |
| Capacitance (nF) @ 1MHz | 2.76 | 8.73 | 8.91 |
| DF(%) @ 1MHz | <0.15 | <0.10 | <0.10 |
| Dielectric Constant @ 1KHz | 109 | 111.6 | 118.8 |
| TCC (ppm/°C) −55°C to 25°C | 5.0 | 20.0 | 30.8 |
| TCC (ppm/°C) 25°C to 125°C | −20.5 | 26.0 | 35.2 |
| Insulation Resistance (ohm): | | | |
| at 25° | $1.8 \times 10^{13}$ | $2.5 \times 10^{12}$ | $3.0 \times 10^{12}$ |
| at 125° | $4.9 \times 10^{11}$ | $2.5 \times 10^{11}$ | $3.0 \times 10^{11}$ |
| Breakdown Voltage | 1375 | 1400 | 1400 |

The values given for the examples herein are subject to variations based on factors known in the art. For example, with respect to compositions 1-34 herein, the dielectric constant may be significantly increased by pulverizing, milling, uniformly dispersing, or otherwise reducing the starting materials to very fine particles. Such practices, which are commonly carried out in the course of manufacturing ceramic capacitors, were not employed to their full extent in the preparation of compositions 1-34. In addition, variations in firing conditions, sample thickness, preparation and measurement error may result in differences in the observed values for the same compositions. Thus, depending upon manufacturing techniques, and with little regard to particle size, the properties of ceramic composition made using the proportions given in compositions 1-34 can vary from values given. For example, the dielectric constants may vary by 10, the dissipation factor may vary by ±0.02 percent and the capacitance change with temperature versus capacitance at 25°C per °C may vary by ±10 parts per million.

It is to be understood that the invention is not limited to the illustrations described and shown herein, which are deemed to be merely illustrative of the best modes of carrying out the invention. The invention also encompasses all such modifications which are within the scope of the following claims.

## Claims

1. A ceramic dielectric composition comprising about 84.7 to 86.4 weight percent of a precusor material comprising about 0 to 0.68 weight percent strontium oxide, about 6.61 to 8.69 weight percent barium oxide, about 8.32 to 11.15 weight percent lead oxide, about 52.08 to 55.03 weight percent neodymium oxide, about 28.76 to 29.88 weight percent titanium oxide, about 0 to 0.06 weight percent manganese oxide, and 13.61 to 15.3 weight percent of a frit composition comprising about 10.00 to 10.20 weight percent bismuth titanate, about 0.1 weight percent manganese carbonate, about 0.25 to 0.26 weight percent niobium pentoxide, about 2.35 to 4.35 weight percent lead oxide, about 0.09 to 0.50 weight percent boron oxide, and about 0.28 to 0.70 weight percent silicon oxide.

2. A ceramic dielectric composition according to claim 1 in which the precursor material comprises about 7.43 weight percent barium oxide, about 9.46 weight percent lead oxide, about 55.03 weight percent neodymium oxide, about 28.07 weight percent titanium oxide; and about 15.30 weight percent of a ceramic frit composition comprising about 10.00 weight percent bismuth titanate, about 0.10 weight percent manganese carbonate, about 0.25 weight percent niobium pentoxide, about 3.75 weight percent lead oxide, about 0.50 weight percent boron oxide, and about 0.70 weight percent silicon oxide.

3. A ceramic dielectric composition according to claim 1 in which the precursor material comprises about 8.47 weight percent barium oxide, about 10.38 weight percent lead oxide, about 52.02 weight percent neodymium oxide, about 29.13 weight percent titanium oxide, and about 15.30 weight percent of a ceramic composition comprising about 10.0 weight percent bismuth titanate, 0.10 weight percent manganese carbonate, about 0.25 weight percent niobium pentoxide, about 4.23 weight percent lead oxide, about 0.21 weight percent boron oxide, and about 0.51 weight percent silicon oxide.

4. A ceramic dielectric composition according to claim 1 in which the precursor material comprises about 8.47 weight percent barium oxide, about 10.38 weight percent lead oxide, about 52.02 weight percent neodymium oxide, about 29.13 weight percent titanium oxide, and about 13.61 weight percent of a ceramic composition comprising about 10.00 weight percent bismuth titanate, about 0.10 weight percent manganese carbonate, about 0.26 weight percent niobium pentoxide, about 2.65 weight percent lead oxide, about 0.13 weight percent boron oxide, and about 0.32 weight percent silicon oxide.

5. A multilayer capacitator structure comprising multiple layers of a ceramic composition according to any one of claims 1, 2, 3 or 4 having internal electrodes, the multilayer capacitator being sintered at temperatures below 1,140°C for one to four hours.

6. A multilayer capacitator structure of claim 5 in which the internal electrodes comprise approximately 70 weight percent silver and 30 weight percent palladium.

7. Electrical apparatus comprising a capacitor structure according to either of claims 5 and 6.

## DOCUMENTS CONSIDERED TO BE RELEVANT

EP 88303375.5

| Category | Citation of document with indication, where appropriate, of relevant passages | Relevant to claim | CLASSIFICATION OF THE APPLICATION (Int. Cl.4) |
|---|---|---|---|
| A | JP - B2 - 56-26 321 (MURATA)<br><br>* Claim; column 3, line 14 – column 5, line 6; fig. * | 1-7 | H 01 B 3/12<br>C 04 B 35/46<br>H 01 G 4/12 |
| A | US - A - 4 506 026 (HODGKINS et al.)<br><br>* Abstract; column 2, lines 48-64; column 3, lines 34-66 * | 1-7 | |
| A | JOURNAL OF THE AMERICAN CERAMIC SOCIETY, Columbus, Ohio, USA, vol. 67, no. 4, 1984<br><br>K. WAKINO et al. "Microwave Characteristics of $(Zr,Sn)TiO_4$ and $BaO-PbO-Nd_2O_3-TiO_2$ Dielectric Resonators"<br>pages 278-281<br><br>* Page 279, right hand column – page 280, left hand column * | 1 | **TECHNICAL FIELDS SEARCHED (Int. Cl.4)**<br><br>H 01 B 3/00<br>C 04 B 35/00<br>H 01 G 4/00 |
| A | FERROELECTRICS, vol. 27, 1980<br><br>D. KOLAR et al. "High Stability, low loss Dielectrics in the System"<br>pages 269-272<br><br>* Abstract * | 1 | |

The present search report has been drawn up for all claims

| Place of search | Date of completion of the search | Examiner |
|---|---|---|
| VIENNA | 07-07-1988 | KUTZELNIGG |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82